# EUROPÄISCHE PATENTSCHRIFT

(11) **EP 3 640 617 B1**
(45) Veröffentlichungstag und Bekanntmachung des Hinweises auf die Patenterteilung: **14.08.2024**
(21) Anmeldenummer: 19197911.1
(22) Anmeldetag: 18.09.2019
(51) Int. Cl.: B60R 16/02, H01B 7/08, H01B 7/32, G01K 11/32, B60R 16/03, H01B 9/00

(54) **KRAFTFAHRZEUGBORDNETZSYSTEM SOWIE VERFAHREN ZUM BETREIBEN EINES KRAFTFAHRZEUGBORDNETZSYSTEMS**
MOTOR VEHICLE ON-BOARD ELECTRIC SYSTEM AND METHOD FOR OPERATING SAME
SYSTÈME DE RÉSEAU EMBARQUÉ DE VÉHICULE AUTOMOBILE ET PROCÉDÉ DE FONCTIONNEMENT D'UN SYSTÈME DE RÉSEAU EMBARQUÉ DE VÉHICULE AUTOMOBILE

(30) Priorität: 15.10.2018 DE 102018125416
(43) Veröffentlichungstag der Anmeldung: 22.04.2020
(73) Patentinhaber: Auto-Kabel Management GmbH, 79688 Hausen i.W. (DE)
(72) Erfinder: Rafati, Sohejl, 41236 Mönchengladbach (DE)
(74) Vertreter: Cohausz & Florack

(56) Entgegenhaltungen:
- DE-A1- 102012 208 115
- DE-A1- 102015 206 096
- DE-A1- 102016 115 823
- DE-U1- 202005 011 235
- US-A1- 2011 218 790
- US-B1- 7 154 081

## Beschreibung

Der Gegenstand betrifft ein Kraftfahrzeugbordnetzsystem, insbesondere in einer automotiven Anwendung.

Die Anzahl der Verbraucher in Kraftfahrzeugbordnetzen nimmt stetig zu. Darüber hinaus nimmt auch der Leistungsbedarf von Verbrauchern, insbesondere Komfortverbrauchern zu, so dass die ohmschen Verluste in einem Kabel eines Kraftfahrzeugbordnetzsystems nicht mehr vernachlässigbar sind und zu einer relevanten Erwärmung der Kabel führen können.

Auch die zunehmende Elektrifizierung von Antriebstechnologien stellt das Kraftfahrzeugbordnetz vor neue Herausforderungen, da insbesondere die zu übertragenen Leistungen ein Vielfaches höher sind, als dies bisher bei Verbrauchern bekannt war. Die dadurch fließenden hohen Ströme führen zu erheblichen ohmschen Verlusten auf den Leitungen der Kabel des Kraftfahrzeugbordnetzsystems und mithin zu einer erheblichen Erwärmung. Insbesondere bei Kabeln, welche an die Topographie der Karosse angepasst sind, insbesondere Biegungen und Querschnittsveränderungen aufweisen, kann es an den Übergängen entlang der Ausbreitungsrichtung des Kabels zu erheblichen Wärmeentwicklungen kommen.

DE 10 2015 206096 A1 offenbart ein Kraftfahrzeugbordnetzsystem mit einer optischen Messeinrichtung zum Messen einer Leitertemperatur. US 7 154 081 B1 offenbart ein Flugzeugbordnetzsystem mit einer optischen Messeinrichtung zum Messen einer Leitertemperatur. US 2011/218790 A1 offenbart ein System zur Überwachung der Temperatur von Hochspannungsleitungen, wobei ein Lichtwellenleiter entlang des Hochspannungskabels verläuft. DE 10 2016 115823 A1, DE 10 2012 208115 A1 und

DE 20 2005 011235 U1 offenbaren Bordnetzsysteme von Fahrzeugen, bei denen Lasten entsprechend einer Temperatur der sie verbindenden Leiter geregelt werden.

Bisher war es notwendig, die Leitungen des Kraftfahrzeugbordnetzsystems so auszulegen, dass sie stets eine ausreichende Stromtragfähig sowie einen ausreichenden Leitwert haben, so dass im Dauerbetrieb bei maximaler Last keinerlei Beeinträchtigungen auftreten. Da keinerlei Kenntnis über die Wärmeentwicklung des Kabels im Realbetrieb bestehen, musste die Dimensionierung mit erheblichen Toleranzen erfolgen, so dass stets ein sicherer Betrieb ermöglicht werden konnte.

Vor diesem Hintergrund lag dem Gegenstand die Aufgabe zu Grunde, die Dimensionierung von Kabeln eines Kraftfahrzeugbordnetzsystems an die tatsächlichen Anforderungen anpassen zu können.

Dem Gegenstand liegt die Erkenntnis zu Grunde, dass in Kenntnis der Temperatur entlang des Kabels ein Leistungsmanagement erfolgen kann, so dass eine Überhitzung der Kabel stets vermieden werden kann. Dieses Leistungsmanagement führt dazu, dass die Dimensionierung der Kabel geringer als bisher ausfallen kann, da die Toleranzen geringer ausfallen können, insbesondere die Leiterquerschnitte kleiner sein können.

Gegenständlich wird vorgeschlagen, dass im Betrieb eines Kraftfahrzeugs in dessen Kraftfahrzeugbordnetzsystem die Temperatur eines elektrischen Kabel mit einem metallischen Leiter und einer den Leiter umgebenden elektrischen Isolation gemessen wird. Hierzu wird vorgeschlagen, dass ein in der Isolation geführter Lichtwellenleiter zumindest bereichsweise unmittelbar an dem Leiter des Kabels anliegt. Mit Hilfe einer optischen Messeinrichtung wird ein Lichtsignal in den Lichtwellenleiter eingekoppelt. Zur Messung einer Leitertemperatur anhand des eingekoppelten Lichtsignals wird Reflektometrie vorgeschlagen. Hierdurch ist es möglich, eine Leitungssteuerung auf Basis von realen Betriebszuständen des Leiters, insbesondere auf Basis realer Leitertemperaturen, durchzuführen.

Mit Hilfe der gegenständlichen Anordnung ist es möglich, eine Temperaturerfassung auf einer gesamten Leitungslänge in Echtzeit durchzuführen. Hierzu wird der Lichtwellenleiter zumindest bereichsweise in unmittelbaren Kontakt zum elektrischen Leiter gebracht. Das eingekoppelte Lichtsignal, welches im Realbetrieb des Kraftfahrzeugs eingekoppelt werden kann, wird in dem Lichtwellenleiter reflektiert, wobei die Reflektion abhängig von der Temperatur des Lichtwellenleiters selbst und/oder der den Lichtwellenleiter umgebenden Temperatur ist. Mit Hilfe von Reflektometrie ist eine Temperaturmessung entlang des Lichtwellenleiters möglich, wobei die Temperaturmessung an einzelnen Positionen entlang der Längsachse des Lichtwellenleiters möglich ist.

Wie bereits erläutert, ist es mit Hilfe des Lichtwellenleiters möglich, an einzelnen Positionen eine Temperatur durch Reflektometrie zu messen. Die Temperatur wird entlang der Längsausrichtung des Lichtwellenleiters an mehreren Punkten gemessen.

Dadurch ist es möglich, ein Temperaturprofil zu erstellen. Die Messeinrichtung kann abhängig von der Messung ein Temperaturprofil über eine Länge des Kabels ausgeben. Auch wird vorgeschlagen, dass die Messung ortsaufgelöst erfolgt, wobei einzelnen Positionen innerhalb des Kabels jeweils eine Temperatur zugeordnet werden kann.

Auch wird vorgeschlagen, dass die Messeinrichtung, abhängig von der Messung ein Steuersignal ausgibt. Beispielsweise ist es möglich, dass ein Temperaturgrenzwert festgelegt ist und bei einem Überschreiten dieses Grenzwertes ein Steuersignal ausgegeben wird. Dabei muss der Grenzwert an einer Mehrzahl an Positionen entlang des Leiters überschritten werden, ehe ein Steuersignal ausgegeben wird.

Gemäß einem Ausführungsbeispiel wird vorgeschlagen, dass der Lichtwellenleiter zusammen mit der Isolation auf den Leiter extrudiert ist oder dass der Lichtwellenleiter zusammen mit Litzen des Leiters verseilt, verflochten und/oder verdrillt ist.

Regelmäßig werden elektrische Leiter mit einer Isolation extrudiert. Die Leiter können dabei als Litzenleiter oder als Vollmaterial gebildet sein und einen Extruder zugeführt werden. Am Ausgang des Extruders ist der Leiter mit einem Kunststoff vollständig beschichtet, so dass ein Kabel gebildet ist. Ein Leiter kann aus Aluminium oder Aluminiumlegierung sowie Kuper oder Kupferlegierungen gebildet sein. Auch ist es möglich, dass ein Leiterprofil rund oder rechteckig ist. Insbesondere kann der Leiter ein Flachleiter sein, welcher aus Vollmaterial gebildet ist.

In dem Extruder wird neben dem Leiter der Lichtwellenleiter zugeführt und mit der Isolation auf den Leiter auf extrudiert. Hierbei erfolgt die Extrusion derart, dass der Leiter zumindest bereichsweise unmittelbar auf dem Leiter aufliegt.

Ist der Leiter ein Litzenleiter, so ist es ebenfalls möglich, während des Verlitzens den Lichtwellenleiter als eine Litze in den Leiter einzubringen. Die Litzen können dabei verseilt, verflochten und/oder verdrillt werden, wobei der Lichtwellenleiter eine der Litzen ist.

Gemäß einem Ausführungsbeispiel wird vorgeschlagen, dass der Lichtwellenleiter über eine Gesamtlänge des Kabels in der Isolation geführt ist. Somit kann über den Lichtwellenleiter, insbesondere an den Stellen, an denen er unmittelbar an dem Leiter anliegt, eine Temperatur gemessen werden. Erstreckt sich der Lichtwellenleiter über die gesamte Länge des Kabels, ist auch eine Temperaturmessung über die gesamte Länge des Kabels möglich. Um ein vollständiges Temperaturprofil zu bestimmen, wird vorgeschlagen, dass der Lichtwellenleiter über eine gesamte Länge des Kabels unmittelbar an dem Leiter anliegt.

Gemäß einem Ausführungsbeispiel wird vorgeschlagen, dass der Lichtwellenleiter an einer Kupplung aus der Isolation herausgeführt ist und mit der Messeinrichtung verbunden ist. Der Lichtwellenleiter wird insbesondere unbeschädigt an der Kupplung aus der Isolation herausgeführt, so dass dieser unmittelbar mit der Messeinrichtung verbunden werden kann, ohne das Streuverhalten des Lichtwellenleiters negativ zu beeinflussen. Mit Hilfe der Kupplung ist es möglich, den Lichtwellenleiter so aus der Isolation herauszuführen, dass diese den Leiter weiterhin insbesondere gegenüber Feuchtigkeit schützen kann. Die Kupplung kann insbesondere unmittelbar auf der Isolation aufgebracht sein. Dabei kann die Kupplung beispielsweise feuchtigkeitsdicht an der Isolation angeordnet sein.

Zur Temperaturmessung wird das Reflektionsverhalten des Lichtwellenleiters ausgewertet. Insbesondere eine temperaturbedingte Veränderung des Brechungsindexes führt zu einem veränderten Reflektionsverhalten, welches mittels Reflektometrie ausgewertet werden kann. Je nach Art und Dauer des eingekoppelten Lichtsignals ist eine räumliche Auflösung mit einer Genauigkeit von weniger als 1 cm bis ca. 20 cm möglich. Das eingekoppelte Lichtsignal wird mittels optischer Zeitbereichs-Reflektometrie, optischer Frequenzbereichs-Reflektometrie oder Bragg-Reflektometrie ausgewertet. Bei der Zeitbereichs-Reflektometrie wird insbesondere eine Laufzeit eines Lichtsignals sowie des reflektierten Anteils des Lichtsignals ausgewertet. Bei der optischen Frequenzbereichs-Reflektometrie wird insbesondere eine Frequenzverschiebung des reflektierten Lichtes ausgewertet.

Das Lichtsignal wird vorzugsweise als Lichtimpuls mittels der Messeinrichtung in den Lichtwellenleiter eingekoppelt. Dabei werden die Lichtimpulse mit zeitlichen Abständen zueinander eingekoppelt. Dies ermöglicht eine hohe räumliche Auflösung der Temperaturmessung.

Gemäß einem Ausführungsbeispiel wird vorgeschlagen, dass eine elektrische Koppeleinrichtung mit dem Leiter verbunden ist, dass die elektrische Koppeleinrichtung mit der Messeinrichtung in Wirkverbindung ist und dass die Koppeleinrichtung abhängig von dem Steuersignal der Messeinrichtung einen Leistungsfluss in dem Leiter verändert. Mit dem Wissen der Temperatur in dem Leiter, insbesondere über einen Leitungsverlauf, kann an Übergängen zwischen zwei oder mehreren Leitern, beispielsweise an Knotenpunkten, eine Steuerung des Leistungsflusses erfolgen, so dass eine Grenztemperatur innerhalb des Leiters an keiner Stelle überschritten wird. Ist die Koppeleinrichtung zur Steuerung des Leistungsflusses, insbesondere zur Einstellung der von einem ersten Leitungsabschnitt an einen zweiten Leitungsabschnitt übertragenen elektrischen Leistung eingerichtet, kann bei festgestellter Erwärmung eine Reduzierung der eingespeisten Leistung erfolgen.

Bei einer thermischen Überlastung, also bei einem Aufheizen des Leiters über einen oberen Grenzwert, kann die Koppeleinrichtung diesen Leiter stromlos schalten, in dem der Leiter entweder Lastfrei geschaltet wird oder von einer Spannungsquelle getrennt wird. Kommt es zu einem Aufheizen des Leiters über einen unteren Grenzwert, kann die Koppeleinrichtung, beispielsweise mittels Pulsweitenmodulation, den Stromfluss auf dem Leiter begrenzen.

Auch ist es möglich, die Leistungsaufnahme von Verbrauchern abhängig von dem Steuersignal einzustellen. Die Koppeleinrichtung kann beispielsweise Teil eines Verbrauchers sein oder mit einem Verbraucher gekoppelt sein und beispielsweise ein Steuergerät eines Verbrauchers beeinflussen. Auch kann die Koppeleinrichtung Teil des Steuergerätes sein. Mit Hilfe des Steuergerätes lässt sich die Leistungsaufnahme eines Verbrauchers einstellen, insbesondere über Einstellung des inneren Widerstands in der Last.

Ein Komfortverbraucher ist beispielsweise die Sitzheizung, welche einerseits keinerlei Sicherheitsrelevanz hat und andererseits eine hohe Leistungsaufnahme aufweist. Ist die Sitzheizung eingeschaltet, so fließt über den Kabelstrang, der zu der Sitzheizung führt, ein relativ hoher Strom. Um diesen Strom zu reduzieren, was bei einer zu befürchtenden Überhitzung auf dem entsprechenden Kabelstrang sinnvoll ist, kann die Sitzheizung durch das Steuergerät entweder herunter geregelt werden oder gänzlich abgeschaltet werden. Solche Leistungsstrategien, bei denen entweder die Leistung herunter geregelt wird oder gänzlich eine Leistungsaufnahme abgeschaltet wird, können für jegliche Komfortverbraucher eingesetzt werden.

Insbesondere kann eine Mehrzahl an Komfortverbrauchern entlang eines selben Kabelstrangs angeordnet sein, so dass auf einem Kabelstrang ein hoher Leistungsfluss ist. Durch Ansteuerung der jeweiligen Steuergeräte durch die Koppeleinrichtung und/oder das Steuersignal ist es möglich, die Leistungsaufnahme einzelner Verbraucher entlang eines Kabelstrangs zu reduzieren, um so die Funktionsfähigkeit anderer Verbraucher an diesem Kabelstrang aufrechtzuerhalten und gleichzeitig eine Überhitzung des Kabels zu verhindern.

Es wird vorgeschlagen, dass für einen Kabelstrang bzw. ein Kabel eine erste, untere Grenztemperatur des Leiters bestimmt ist, bei deren Überschreitung eine erste Regelstrategie aktiviert wird. Eine erste Regelstrategie kann die Reduzierung der Leistungsaufnahme eines oder mehrerer Verbraucher entlang des Kabels beinhalten oder das Abschalten eines oder einer Mehrzahl, bevorzugt jedoch nicht aller Verbraucher entlang des Kabels. Auch kann ein Stromfluss auf dem Kabelstrang beschränkt werden und/oder der Kabelstrang zeitweise von einer Spannungsquelle getrennt werden. Die Regelstrategie kann abhängig von dem Steuersignal sein, welches wiederum abhängig von der Überschreitung der ersten Grenztemperatur sein kann.

Es wird vorgeschlagen, dass für einen Kabelstrang bzw. ein Kabel eine zweite, obere Grenztemperatur des Leiters bestimmt ist, bei deren Überschreitung eine zweite Regelstrategie aktiviert wird. Eine zweite Regelstrategie kann das Abschalten eines oder mehrerer, bevorzugt aller Verbraucher entlang des Kabels beinhalten. Auch kann ein Stromfluss auf dem Kabelstrang unterbrochen werden und/oder der Kabelstrang vollständig von einer Spannungsquelle getrennt werden. Die Regelstrategie kann abhängig von dem Steuersignal sein, welches wiederum abhängig von der Überschreitung der zweiten Grenztemperatur sein kann. Hierdurch wird eine Beschädigung des Kabels sicher vermieden.

Durch die kaskadierte Abschaltung bzw. Regelung einzelner Verbraucher anhand eines ersten Grenzwertes und eines zweiten Grenzwertes ist es möglich, den Betrieb einzelner Verbraucher an dem Kabelstrang bei drohender Überhitzung der Leitung in dem Kabelstrang aufrecht zu halten und bei einem Überschreiten einer kritischen Temperatur alle Verbraucher auszuschalten, so dass das Kabel nicht beschädigt wird.

Gemäß einem Ausführungsbeispiel wird vorgeschlagen, dass die Messeinrichtung und die Koppeleinrichtung in einem gemeinsamen Gehäuse angeordnet sind. An einem jeweiligen Ende eines Kabels, beispielsweise an beiden distalen Enden des Kabels, kann eine Koppeleinrichtung vorgesehen sein, mit der das Kabel entweder an ein oder mehrere andere Kabel gekoppelt wird oder an einen oder mehreren Verbraucher. Ist in zumindest einer dieser Koppeleinrichtungen unmittelbar die Messeinrichtung angeordnet, ist der Platzbedarf gegenüber separaten Gehäusen reduziert und es wird eine integrierte Leistungssteuerung ermöglicht.

Gemäß einem Ausführungsbeispiel wird vorgeschlagen, dass die Koppeleinrichtung einen ersten Anschluss für das Kabel und einen zweiten Anschluss für einen elektrischen Teilnehmer des Kraftfahrzeugbordnetzes, insbesondere eine Last oder eine Spannungsquelle, z.B. eine Batterie, aufweist. Mit Hilfe der Koppeleinrichtung ist es möglich, Teilnehmer und/oder Spannungsquellen beispielsweise Starterbatterien oder Antriebsbatterien an das Kabel anzukoppeln. Somit ist in der Koppeleinrichtung ein integrierter Anschluss für das Kabel, den Teilnehmer und insbesondere auch die Messeinrichtung realisiert. Mit Hilfe der Koppeleinrichtung kann somit unmittelbar an dem Teilnehmer bzw. der Spannungsquelle eine Leistungssteuerung erfolgen.

Gemäß einem Ausführungsbeispiel wird vorgeschlagen, dass eine Mehrzahl an Kabeln über eine Mehrzahl an Koppeleinrichtungen miteinander vermascht sind. In modernen Kraftfahrzeugbordnetztopologien wird insbesondere aus Redundanzgründen eine vermaschte Verkabelung bevorzugt. Hierbei sind Knotenpunkte untereinander über zwei oder mehr Pfade, die aus Kabeln und ggf. anderen Knotenpunkten gebildet sind, miteinander verbunden.

Durch Messung der Temperaturen entlang verschiedener Kabel des vermaschten Netzes kann eine Temperaturverteilung innerhalb des vermaschten Netzes bestimmt werden. Droht eines der Kabel zu überhitzen, so kann mittels der Koppeleinrichtung ein Leistungsfluss derart beeinflusst werden, dass über das jeweilige Kabel ein geringerer Strom fließt und der Leistungsbedarf eines Verbrauchers über Stromflüsse auf anderen Kabeln des vermaschten Netzes gedeckt wird. Das vermaschte Netz an Kabeln innerhalb des Bordnetzes wird somit "intelligent", in dem Leistungsflüsse abhängig von Temperaturen auf einzelnen Kabeln des vermaschten Netzes gesteuert werden.

Erfindungsgemäß wird vorgeschlagen, dass eine elektrische Last mit dem Leiter verbunden ist, dass die elektrische Last mit der Messeinrichtung Wirkverbindung ist und dass die elektrische Last abhängig von dem Steuersignal eine Leistungsaufnahme von dem Leiter verhindert. Wie in dem obigen Beispiel hinsichtlich der Sitzheizung bereits erläutert, kann die elektrische Last durch Veränderung ihres Betriebsmodus eine geringere Leistungsaufnahme haben. Auch ist durch Einstellung eines inneren Widerstands der Last die Leistungsaufnahme einstellbar.

Ein weiterer Aspekt ist ein Verfahren nach Anspruch 13, bei dem eine Rückstreuung eines eingekoppelten Lichtsignals aus einem Lichtwellenleiter mittels Reflektometrie erfasst wird und abhängig von der erfassten Rückstreuung eine Leitertemperatur des Leiters bestimmt wird.

Dabei wird vorgeschlagen, dass zumindest zwei Lichtimpulse mit einer Pulsdauer von weniger als 1 ns in dem Lichtwellenleiter eingespeist werden. Auch ist es möglich, dass das Lichtsignal kohärent ist, womit eine optimierte Messung der Rückstreuung möglich ist. Auch kann das Lichtsignal monochromatisch sein, so dass Interferenzmuster verbessert ausgewertet werden können.

Mit Hilfe des gegenständlichen Verfahrens ist es auch möglich, bereits im Betrieb befindliche Bordnetze auszuwerten, insbesondere hinsichtlich der Temperaturverteilung auf den Kabeln im laufenden Betrieb. Somit können Analysedaten aus dem laufenden Betrieb erfasst werden und für eine spätere Dimensionierung neuerer Kabel verwendet werden. Daher werden Temperaturprofile und Betriebsdaten erfasst und anschließend bei einer Dimensionierung zumindest des Leiterquerschnitts und/oder der Isolation des Kabels berücksichtigt. Die so berücksichtigten Temperaturprofile fließen somit in die Herstellung des neuen Kabels anhand der berechneten Dimensionierung ein.

Nachfolgend wird der Gegenstand anhand einer Ausführungsbeispiele zeigenden Zeichnung näher erläutert. In der Zeichnung zeigen:
- Fig. 1: eine Ansicht eines Kraftfahrzeugbordnetzes;
- Fig. 2a, b: Kabel gemäß Ausführungsbeispielen;
- Fig. 3: ein Kabel mit einer Kupplung;
- Fig. 4: ein Kabel mit einer Koppeleinrichtung;
- Fig. 5: eine Koppeleinrichtung mit mehreren angeordneten Kabeln.

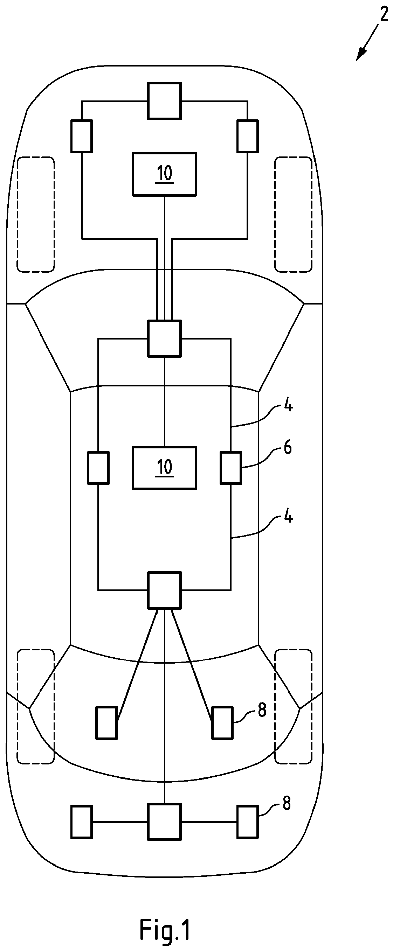

Fig. 1 zeigt ein Kraftfahrzeugbordnetz 2 in einer stark vereinfachten Darstellung. Das Kraftfahrzeugbordnetz 2 weist eine Mehrzahl an Kabeln 4 auf, die zwischen Koppeleinrichtungen (auch Knoten genannt) 6 verschaltet sind. An die Kabel 4 oder verbunden mit einer Koppeleinrichtung 6 können Teilnehmer 8, beispielsweise Verbraucher, in dem Kraftfahrzeugbordnetz 2 angeordnet sein. Darüber hinaus können in dem Kraftfahrzeugbordnetz 2 ein oder mehrere Energiespeicher 10 angeordnet sein. Die Energiespeicher können unmittelbar mit einem Kabel 4 oder über eine Koppeleinrichtung 6 mit einem Kabel 4 verbunden sein.

Der Einfachheit halber ist das Kraftfahrzeugbordnetz 2 mit nur einem Spannungsniveau gezeigt, es versteht sich jedoch, dass zumindest eine Masserückführung entweder über ein separates Kabel 4, integriert in dem Kabel 4 oder über die Karosse von einem Teilnehmer 8 zu einem Energiespeicher 10 notwendig ist.

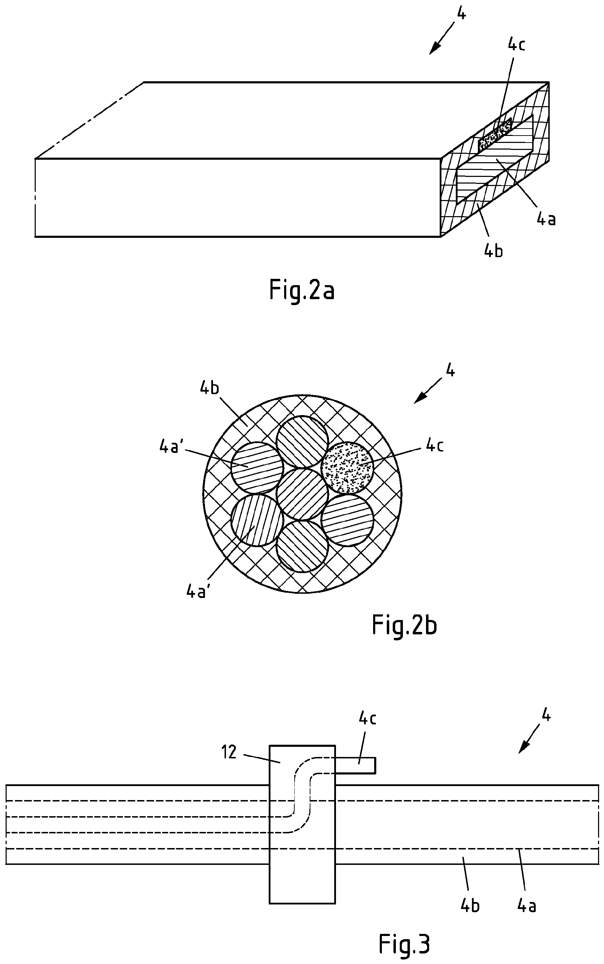

Die Kabel 4 können Flachkabel, wie in Fig. 2a gezeigt, sein. Ein Flachkabel ist gebildet aus einem Leiter 4a, der einen insbesondere rechteckigen Querschnitt hat und aus Vollmaterial gebildet ist. Der Leiter 4a ist ummantelt von einer Isolation 4b. Die Isolation 4b wird insbesondere mittels Extrusion auf den Leiter 4a aufgebracht.

Gegenständlich wird in dem Kabel 4 ein Lichtwellenleiter 4c geführt. Der Lichtwellenleiter 4c ist insbesondere zumindest bereichsweise unmittelbar an dem Leiter 4a angeordnet. Dabei berührt der Lichtwellenleiter 4c den Leiter 4a des Kabels 4. Der Lichtwellenleiter 4c wird beispielsweise beim Extrudieren der Isolation 4b auf den Leiter 4a mit in die Isolation 4b eingebracht, das heißt, dass in einem Extrusionsschritt sowohl der Lichtwellenleiter 4c als auch die Isolation 4b auf den Leiter 4a aufgebracht werden.

Auch ist es möglich, dass ein Kabel 4 als Litzenleitung mit einer Mehrzahl einen Leiter 4a bildenden Litzen 4a' und einer die Litzen 4a' umgebenen Isolation 4b gebildet ist. Die Litzen 4a' sind miteinander verwoben, was insbesondere durch ein verdrillen, verlitzen, verseilen ausgedrückt werden kann. Zusammen mit den einzelnen Litzen 4a' ist ein Lichtwellenleiter 4c in das Kabel 4 eingewoben.

Der Lichtwellenleiter 4c kann an einer Kupplung 12, wie in Fig. 3 gezeigt aus dem Kabel 4 herausgeführt werden. Fig. 3 zeigt eine Kupplung 12, die die Isolation 4b des Kabels 4 vollständig umschließt. Innerhalb der Kupplung 12 ist der Lichtwellenleiter 4c aus der Isolation 4b des Kabels 4 herausgeführt. In der Kupplung 12 kann eine Messeinrichtung angeordnet sein oder der Lichtwellenleiter 4c kann aus der Kupplung 12 herausgeführt werden und außerhalb der Kupplung 12 an eine Messeinrichtung angeschlossen werden.

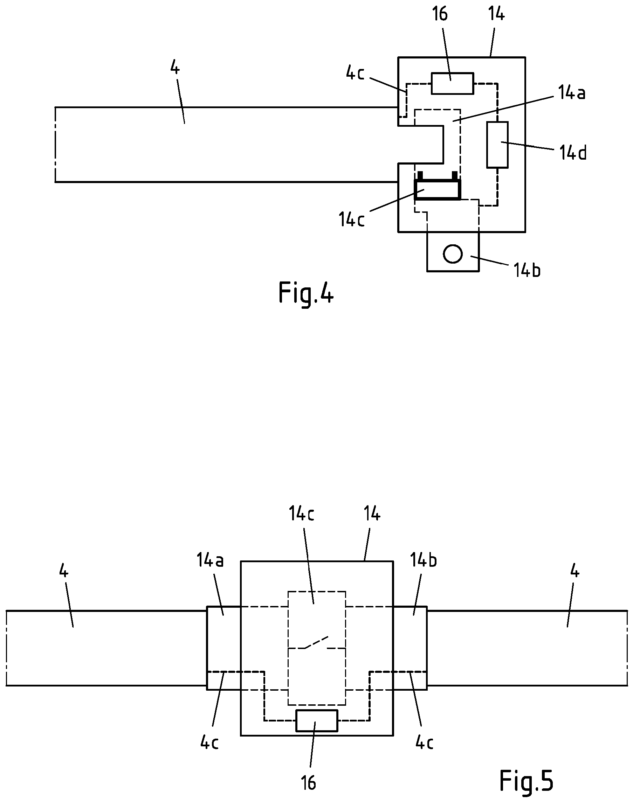

Fig. 4 zeigt ein Kabel 4, welches an einer Koppeleinrichtung 14 angeordnet ist. Die Koppeleinrichtung 14 kann einen ersten Anschluss 14a sowie einen zweiten Anschluss 14b aufweisen. Die Anschlüsse 14a, b können als Anschlussfahne, als Bolzen, als Krimpanschlüsse oder dergleichen ausgeführt werden. An die Anschlüsse 14a, b können die Leiter 4a des Kabels 4 mechanisch und elektrisch angeschlossen werden.

Zwischen den Anschlüssen 14a, b kann ein Schaltelement 14c, beispielsweise ein Halbleiterschalter angeordnet werden. Das Schaltelement 14c wird über einen Prozessor 14d angesteuert. Der Prozessor 14d empfängt ein Steuersignal von einer Messeinrichtung 16. Die Messeinrichtung 16 kann in dem Gehäuse der Koppeleinrichtung 14 oder getrennt davon angeordnet sein. An die Messeinrichtung 16 kann der Lichtwellenleiter 4c des Kabels 4 angeschlossen werden. Mit Hilfe der Messeinrichtung 16 können Lichtimpulse in den Lichtwellenleiter 4c eingekoppelt werden. Der Lichtwellenleiter 4c berührt den Leiter 4 entlang der Längsausrichtung des Kabels 4. Durch die Temperaturveränderungen verändert sich zumindest der Brechungsindex des Lichtwellenleiters 4c, so dass Refelektionsmuster des eingespeisten Lichtimpulses von der Messeinrichtung 16 ausgewertet werden können. Durch diese Auswertung ist eine Temperatur des Leiters 4a entlang des Kabels 4 ermittelbar. Insbesondere kann dabei ein Temperaturprofil über den Leiter 4a des Kabels 4 erstellt werden.

Die Messeinrichtung 16 kann ein Temperaturprofil oder ein Temperaturmesswert ausgeben und an den Prozessor 14d übermitteln. Anschließend kann die so erhaltene Temperaturinformation in dem Prozessor 14d ausgewertet werden. Die Messeinrichtung 16 wertet die gemessenen Temperaturwerte aus und gibt ein Steuersignal aus und übermittelt dieses an den Prozessor 14d.

Abhängig von der Auswertung der Temperaturinformation in dem Prozessor 14d oder dem empfangenen Steuersignal steuert der Prozessor 14d die Schalteinrichtung 14c an. Dabei ist es möglich, dass der Prozessor 14d die Schalteinrichtung 14c so ansteuert, dass eine Verbindung zwischen den Anschlüssen 14a, 14b geschlossen, geöffnet und/oder pulsierend geöffnet wird. Auch kann beispielsweise mit der Schalteinrichtung 14c ein Widerstand zwischen den Anschlüssen 14a, 14b variiert werden. Somit ist es möglich, dass der Prozessor 14d den Leistungsfluss, insbesondere den Strom bzw. den mittleren Stromfluss zwischen den Anschlüssen 14a, 14b einstellt.

Fig. 5 zeigt ein weiteres Beispiel einer Koppeleinrichtung 14, bei der die Messeinrichtung 16 mit Lichtwellenleitern 4c zweier Kabel verbunden ist und somit Temperaturprofile mehrerer angeschlossener Kabel 4 auswerten kann. Abhängig hiervon kann die Messeinrichtung 16 unter Verwendung eines Prozessors 14 die Schalteinrichtung 14c ansteuern und beispielsweise pulsweitenmoduliert die elektrische Verbindung zwischen den Anschlüssen 14a, 14b öffnen und schließen. Über die Pulsweitenmodulation lässt sich ein mittlerer Stromfluss einstellen, so dass ein Leistungsfluss zwischen den beiden Kabeln 4 variiert werden kann.

Mit Hilfe der erfassten Temperaturprofile, die beispielsweise zusätzlich angereichert mit Betriebsdaten, gespeichert werden, kann bei der Berechnung und Dimensionierung von Kraftfahrzeugbordnetzsystemen das tatsächliche Verhalten des Kabels im Betrieb berücksichtigt werden. So ist es möglich, im realen Betrieb festzustellen, bei welchen Betriebsbedingungen Überhitzungen an Kabeln auftreten. Auch ist es möglich festzustellen, an welchen Positionen die Überhitzung aufgetreten ist. Bei einer anschließenden Neudimensionierung eines Kabelstrangs kann diese Information berücksichtigt werden, und es können beispielsweise die Bereiche, an denen zuvor Überhitzungen aufgetreten sind, mit größeren Kabelquerschnitten versehen werden, so dass dort Überhitzungen vermieden werden.

Auch ist es möglich, im Realbetrieb durch Variation der Schalteinrichtung 14c die Leistungsflüsse über die Kabel 4 des Kraftfahrzeugbordnetzes 2 zu lenken, sodass Überhitzungen einzelner Kabel 4 vermieden werden.

## Patentansprüche

1. Kraftfahrzeugbordnetzsystem umfassend:
- ein elektrisches Kabel (4) mit einem metallischen Leiter (4a) und einer den Leiter (4a) umgebenden elektrischen Isolation (4b),
- einen in der Isolation (4b) geführten Lichtwellenleiter (4c), wobei der Lichtwellenleiter (4c) zumindest bereichsweise unmittelbar an dem Leiter (4a) anliegt
- einer optischen Messeinrichtung (16) eingerichtet zur Einkopplung eines Lichtsignals in den Lichtwellenleiter (4c) und zur Messung einer Leitertemperatur anhand des eingekoppelten Lichtsignals mittels Reflektometrie, wobei die Messeinrichtung (16) die Leitertemperatur entlang einer Längsrichtung des Lichtwellenleiters an mehreren Positionen misst, und wobei die Messeinrichtung (16) abhängig von der Messung ein Steuersignal ausgibt und
- eine elektrische Last (8) mit dem Leiter (4a) verbunden ist, **dadurch gekennzeichnet, dass** die elektrische Last (8) mit der Messeinrichtung (16) in Wirkverbindung ist und die elektrische Last (8) abhängig von dem Steuersignal eine Leistungsaufnahme des Leiters verändert, wobei
- die Messeinrichtung das Steuersignal erst bei einem Überschreiten eines Grenzwertes an einer Mehrzahl an Positionen entlang des Leiters ausgibt.

2. Kraftfahrzeugbordnetzsystem nach Anspruch 1 **dadurch gekennzeichnet,**
- **dass** die Messeinrichtung (16) abhängig von der Messung ein Temperaturprofil über eine Länge des Kabels (4) ausgibt, wobei die Messeinrichtung (16) insbesondere zur ortsaufgelösten Messung der Leitertemperatur eingerichtet ist.

3. Kraftfahrzeugbordnetzsystem nach Anspruch 1 oder 2, **dadurch gekennzeichnet,**
- **dass** der Lichtwellenleiter (4c) zusammen mit Litzen des Leiters verseilt, verflochten und/oder verdrillt ist.

4. Kraftfahrzeugbordnetzsystem nach einem der vorangehenden Ansprüche, **dadurch gekennzeichnet,**
- **dass** der Lichtwellenleiter (4c) über eine gesamte Länge des Kabels (4) in der Isolation (4b) geführt ist und/oder dass der Lichtwellenleiter (4c) über eine gesamte Länge des Kabels (4) unmittelbar an dem Leiter (4a) anliegt.

5. Kraftfahrzeugbordnetzsystem nach einem der vorangehenden Ansprüche, **dadurch gekennzeichnet,**
- **dass** eine Kupplung vorgesehen ist und der Lichtwellenleiter (4c) an der Kupplung aus der Isolation (4b) heraus geführt ist und mit der Messeinrichtung (16) verbunden ist.

6. Kraftfahrzeugbordnetzsystem nach einem der vorangehenden Ansprüche, **dadurch gekennzeichnet,**
- **dass** die Messeinrichtung (16) zur Messung der Leitertemperatur des Lichtwellenleiters mittels optischer Zeitbereichs-Reflektometrie (OTDR), optischer Frequenzbereichs-Reflektometrie (OFDR) oder Bragg Reflektometrie eingerichtet ist.

7. Kraftfahrzeugbordnetzsystem nach einem der vorangehenden Ansprüche, **dadurch gekennzeichnet,**
- **dass** die Messeinrichtung (16) zur Einkopplung des Lichtsignals als Lichtimpulse in zeitlichen Abständen eingerichtet ist.

8. Kraftfahrzeugbordnetzsystem nach einem der vorangehenden Ansprüche, **dadurch gekennzeichnet,**
- **dass** eine elektrische Koppeleinrichtung mit dem Leiter (4) verbunden ist, dass die elektrische Koppeleinrichtung mit der Messeinrichtung (16) in Wirkverbindung ist und dass die Koppeleinrichtung abhängig von dem Steuersignal der Messeinrichtung (16) einen Leistungsfluss in dem Leiter verändert.

9. Kraftfahrzeugbordnetzsystem nach Anspruch 8, **dadurch gekennzeichnet,**
- **dass** die Messeinrichtung (16) und die Koppeleinrichtung in einem gemeinsamen Gehäuse angeordnet sind.

10. Kraftfahrzeugbordnetzsystem nach einem der vorangehenden Ansprüche 8 oder 9, **dadurch gekennzeichnet,**
- **dass** die Koppeleinrichtung einen ersten Anschluss für das Kabel (4) und einen zweiten Anschluss für die Last (8) des Kraftfahrzeugbordnetzes aufweist.

11. Kraftfahrzeugbordnetzsystem nach einem der vorangehenden Ansprüche 8 bis 10, **dadurch gekennzeichnet,**
- **dass** eine Mehrzahl an Kabeln über eine Mehrzahl an Koppeleinrichtungen miteinander vermascht sind.

12. Kraftfahrzeugbordnetzsystem nach einem der vorangehenden Ansprüche 8 bis 11, **dadurch gekennzeichnet,**
- **dass** die Koppeleinrichtung zumindest drei Anschlüsse für Kabel (4) aufweist und dass die Messeinrichtung (16) für jeweils einen Lichtwellenleiter (4c) eines der anschließbaren Kabel (4) einen Anschluss aufweist.

13. Verfahren zum Betreiben eines Kraftfahrzeugbordnetzsystems, insbesondere nach einem der vorangehenden Ansprüche bei dem
- in einen Lichtwellenleiter ein Lichtsignal eingekoppelt wird, wobei der Lichtwellenleiter in einer Isolation eines elektrisches Kabel mit einem Leiter und einer den Leiter umgebenden Isolation geführt ist und zumindest bereichsweise unmittelbar an dem Leiter anliegt, und
- eine Rückstreuung des eingekoppelten Lichtsignals ausgewertet wird, wobei mittels Reflektometrie die Leitertemperatur entlang einer Längsausrichtung des Lichtwellenleiters an mehreren Positionen gemessen wird, und wobei abhängig von der Messung ein Steuersignal ausgegeben wird. und
- eine elektrische Last (8) mit dem Leiter (4a) verbunden ist, **dadurch gekennzeichnet, dass** durch die elektrische Last (8) abhängig von dem Steuersignal eine Leistungsaufnahme von der Leiter (4a) verändert wird,
- wobei
- das Steuersignal erst bei einem Überschreiten eines Grenzwertes an einer Mehrzahl an Positionen entlang des Leiters ausgegeben wird.

14. Verfahren nach Anspruch 13, **dadurch gekennzeichnet,**
- **dass** das Lichtsignal zumindest zwei Lichtimpulse mit einer Pulsdauer von weniger als 1ns aufweist und/oder dass das Lichtsignal kohärent ist und/oder dass das Lichtsignal monochromatisch ist.

15. Verfahren nach Anspruch 13 oder 14, **dadurch gekennzeichnet,**
- **dass** Temperaturprofile des Leiters zusammen mit Betriebsdaten eines das Kraftfahrzeugbordnetzsystem aufweisenden Kraftfahrzeugs in einem Fahrbetrieb gespeichert werden und dass abhängig von den erfassten Temperaturprofilen und Betriebsdaten eine Dimensionierung zumindest des Leiterquerschnitts und/oder der Isolation des Kabels berechnet wird und anschließend ein neues Kabel mit der berechneten Dimensionierung hergestellt wird.

## Claims

1. Motor vehicle on-board electrical system comprising:
- an electrical cable (4) with a metallic conductor (4a) and an electrical insulation (4b) surrounding the conductor (4a),
- an optical waveguide (4c) guided in the insulation (4b), the optical waveguide (4c) bearing directly against the conductor (4a) at least in some areas
- an optical measuring device (16) arranged for coupling a light signal into the optical waveguide (4c) and for measuring a conductor temperature using the coupled light signal by means of reflectometry, the measuring device (16) measuring the conductor temperature along a longitudinal direction of the optical waveguide at a plurality of positions, wherein the measuring device (16) puts out a control signal as a function of the measurement, and
- an electrical load (8) is connected to the conductor (4a),
**characterized in that**
- the electrical load (8) is operatively connected to the measuring device (16) and the electrical load (8) changes a power consumption of the conductor as a function of the control signal, wherein,
- the measuring device outputs the control signal only when a limit value is exceeded at a plurality of positions along the conductor.

2. Motor vehicle on-board electrical system according to claim 1,
**characterized in that**
- the measuring device (16) outputs a temperature profile over a length of the cable (4) as a function of the measurement, the measuring device (16) being arranged in particular for spatially resolved measurement of the conductor temperature.

3. Motor vehicle on-board electrical system according to claim 1 or 2, **characterized in that**
- the optical waveguide (4c) is stranded, braided and/or twisted together with strands of the conductor.

4. Motor vehicle on-board electrical system according to one of the preceding claims,
**characterized in that**
- the optical waveguide (4c) is guided in the insulation (4b) over an entire length of the cable (4) and/or **in that** the optical waveguide (4c) is in direct contact with the conductor (4a) over an entire length of the cable (4).

5. Motor vehicle on-board electrical system according to one of the preceding claims,
**characterized in that**
- a coupling is provided and the optical waveguide (4c) is led out of the insulation (4b) at the coupling and is connected to the measuring device (16).

6. Motor vehicle on-board electrical system according to one of the preceding claims,
**characterized in that**
- the measuring device (16) is arranged for measuring the conductor temperature of the optical waveguide by means of optical time domain reflectometry (OTDR), optical frequency domain reflectometry (OFDR) or Bragg reflectometry.

7. Motor vehicle on-board electrical system according to one of the preceding claims,
**characterized in that**
- the measuring device (16) is arranged to couple in the light signal as light pulses at time intervals.

8. Motor vehicle on-board electrical system according to one of the preceding claims,
**characterized in that**
- an electrical coupling device is connected to the conductor (4), the electrical coupling device is operatively connected to the measuring device (16) and the coupling device changes a power flow in the conductor as a function of the control signal of the measuring device (16).

9. Motor vehicle on-board electrical system according to claim 8, **characterized in that**
- the measuring device (16) and the coupling device are arranged in a common housing.

10. Motor vehicle on-board electrical system according to one of the preceding claims 8 or 9,
**characterized in that**
- the coupling device has a first connection for the cable (4) and a second connection for the load (8) of the vehicle electrical system.

11. Motor vehicle on-board electrical system according to one of the preceding claims 8 to 10,
**characterized in that**
- a plurality of cables are meshed together via a plurality of coupling devices.

12. Motor vehicle on-board electrical system according to one of the preceding claims 8 to 11,
**characterized in that**
- the coupling device has at least three connections for cables (4) and **in that** the measuring device (16) has a connection for a respective optical waveguide (4c) of one of the connectable cables (4).

13. Method for operating a motor vehicle on-board electrical system, in particular according to one of the preceding claims, in which
- a light signal is coupled into an optical waveguide, wherein the optical waveguide is guided in an insulation of an electrical cable with a conductor and an insulation surrounding the conductor and is in direct contact with the conductor at least in certain regions, and
- a backscatter of the coupled-in light signal is evaluated, wherein the conductor temperature is measured at a plurality of positions along a longitudinal direction of the optical waveguide by means of reflectometry, and a control signal being output as a function of the measurement, and
- an electrical load (8) is connected to the conductor (4a),
**characterized in that**
- a power consumption of the conductor (4a) is changed by the electrical load (8) as a function of the control signal, wherein,
- the control signal is only output when a limit value is exceeded at a plurality of positions along the conductor.

14. ^ Method according to claim 13,
**characterized in that**
- the light signal has at least two light pulses with a pulse duration of less than 1ns and/or that the light signal is coherent and/or that the light signal is monochromatic.

15. Method according to claim 13 or 14,
**characterized in that**
- temperature profiles of the conductor are stored together with operating data of a motor vehicle comprising the motor vehicle electrical system in a driving mode, and **in that** a dimensioning of at least the conductor cross-section and/or the insulation of the cable is calculated as a function of the recorded temperature profiles and operating data, and a new cable is then produced with the calculated dimensioning.

## Revendications

1. Système de bord de véhicule automobile comprenant :
- un câble électrique (4) avec un conducteur métallique (4a) et une isolation électrique (4b) entourant le conducteur (4a),
- un guide d'ondes lumineuses (4c) guidé dans l'isolation (4b), où le guide d'ondes lumineuses (4c) abord directement, au moins par zones, au conducteur (4a)
- un dispositif de mesure optique (16) configuré pour coupler un signal lumineux dans le guide d'ondes lumineuses (4c) et pour mesurer une température de conducteur à l'aide du signal lumineux couplé au moyen de réflectométrie, où le dispositif de mesure (16) mesure une température de conducteur le long d'une direction longitudinale du guide d'ondes lumineuses à plusieurs positions, et où le dispositif de mesure (16) émet un signal de commande en fonction de la mesure, et
- une charge électrique (8) est reliée au conducteur (4a), **caractérisé en ce que** la charge électrique (8) est en liaison active avec le dispositif de mesure (16) et la charge électrique (8) modifie une puissance reçue du conducteur en fonction du signal de commande,
où,
- le dispositif de mesure ne émet le signal de commande qu'en cas de dépassement d'une valeur limite à une pluralité de positions le long du conducteur.

2. Système de réseau de bord de véhicule automobile selon la revendication 1 **caractérisé en ce**
- **que** le dispositif de mesure (16) délivre, en fonction de la mesure, un profil de température sur une longueur du câble (4), où le dispositif de mesure (16) est en particulier configuré pour mesurer la température du conducteur avec une résolution locale.

3. Système de réseau de bord de véhicule automobile selon la revendication 1 ou 2, caractérisé en ce
- le guide d'ondes lumineuses (4c) est toronné, entrelacé et/ou torsadé avec des torons du conducteur.

4. Système de réseau de bord de véhicule automobile selon l'une des revendications précédentes,
**caractérisé en ce**
- **que** le guide d'ondes lumineuses (4c) est guidé dans l'isolation (4b) sur toute la longueur du câble (4) et/ou que le guide d'ondes lumineuses (4c) est directement en contact avec le conducteur (4a) sur toute la longueur du câble (4).

5. Système de réseau de bord de véhicule automobile selon l'une des revendications précédentes,
**caractérisé en ce**
- **qu'**un couplage est prévu et que le guide d'ondes lumineuses (4c) est guidé hors de l'isolation (4b) au niveau du couplage et est relié au dispositif de mesure (16).

6. Système de réseau de bord de véhicule automobile selon l'une des revendications précédentes,
**caractérisé en ce**
- **que** le dispositif de mesure (16) est configuré pour mesurer la température de conducteur du guide d'ondes optiques au moyen d'une réflectométrie optique dans le domaine temporel (OTDR), d'une réflectométrie optique dans le domaine fréquentiel (OFDR) ou d'une réflectométrie de Bragg.

7. Système de réseau de bord de véhicule automobile selon l'une des revendications précédentes,
**caractérisé en ce**
- **que** le dispositif de mesure (16) est configuré pour injecter le signal lumineux sous forme d'impulsions lumineuses à intervalles de temps.

8. Système de réseau de bord de véhicule automobile selon l'une des revendications précédentes,
**caractérisé en ce**
- **qu'**un dispositif de couplage électrique est relié au conducteur (4), que le dispositif de couplage électrique est en liaison active avec le dispositif de mesure (16) et que le dispositif de couplage modifie un flux de puissance dans le conducteur en fonction du signal de commande du dispositif de mesure (16).

9. Système de réseau de bord de véhicule automobile selon la revendication 8, **caractérisé en ce**
- **que** le dispositif de mesure (16) et le dispositif de couplage sont disposés dans un boîtier commun.

10. Système de réseau de bord de véhicule automobile selon l'une des revendications 8 ou 9 précédentes,
**caractérisé en ce**
- **que** le dispositif de couplage a un premier raccordement pour le câble (4) et un deuxième raccordement pour la charge (8) du réseau de bord du véhicule automobile.

11. Système de réseau de bord de véhicule automobile selon l'une des revendications 8 à 10 précédentes,
**caractérisé en ce**
- **qu'**une pluralité de câbles sont maillés entre eux par une pluralité de dispositifs de couplage.

12. Système de réseau de bord de véhicule automobile selon l'une des revendications 8 à 11 précédentes,
**caractérisé en ce**
- **que** le dispositif de couplage a au moins trois raccordements pour des câbles (4) et que le dispositif de mesure (16) a un raccordement pour respectivement un guide d'ondes lumineuses (4c) de l'un des câbles (4) raccordables.

13. Procédé pour exploiter un système de réseau de bord de véhicule automobile, en particulier selon l'une des revendications précédentes, où
- un signal lumineux est couplé dans un guide d'ondes lumineuses, où le guide d'ondes lumineuses est guidé dans une isolation d'un câble électrique avec un conducteur et une isolation entourant le conducteur et abord au moins par zones directement au conducteur, et
- une rétrodiffusion du signal lumineux couplé est évaluée, où la température du conducteur est mesurée à plusieurs positions le long d'une orientation longitudinale du guide d'ondes lumineuses au moyen de la réflectométrie, et un signal de commande est émis en fonction de la mesure, et
- une charge électrique (8) est reliée au conducteur (4a), **caractérisé en ce qu'**une puissance reçue par le conducteur (4a) est modifiée par la charge électrique (8) en fonction du signal de commande,
où,
- le signal de commande n'est émis qu'en cas de dépassement d'une valeur limite à une pluralité de positions le long du conducteur.

14. Procédé selon la revendication 13,
**caractérisé en ce**
- **que** le signal lumineux comprend au moins deux impulsions lumineuses avec une durée d'impulsion inférieure à 1ns et/ou que le signal lumineux est cohérent et/ou que le signal lumineux est monochromatique.

15. Procédé selon la revendication 13 ou 14,
**caractérisé en ce**
- **que** des profils de température du conducteur sont mémorisés avec des données de fonctionnement d'un véhicule automobile ayant le système de réseau de bord du véhicule automobile en une mode de conduite et que, en fonction des profils de température et des données de fonctionnement saisis, un dimensionnement d'au moins la section transversale du conducteur et/ou de l'isolation du câble est calculé et un nouveau câble est ensuite fabriqué avec le dimensionnement calculé.
